# EUROPÄISCHE PATENTSCHRIFT

(11) **EP 2 189 695 B1**
(45) Veröffentlichungstag und Bekanntmachung des Hinweises auf die Patenterteilung: **05.10.2011**
(21) Anmeldenummer: 08405289.3
(22) Anmeldetag: 25.11.2008
(51) Int. Cl.: F16L 3/12

(54) **Rohrbogenstütze**
Pipe end support
Support tubulaire coudé

(43) Veröffentlichungstag der Anmeldung: 26.05.2010
(73) Patentinhaber: Geberit International AG, 8645 Jona (CH)
(72) Erfinder: Evertz, Jörg, 8903 Birmensdorf (CH); Eggert, Dominik, 8050 Zürich (CH); Sprotte, Matthias, 8645 Jona (CH); Ricciardi, Nicola, 8808 Pfäffikon (CH)
(74) Vertreter: Groner, Manfred

(56) Entgegenhaltungen:
- EP-A- 1 553 237
- DE-A1- 3 628 326
- DE-A1- 3 923 010
- DE-A1-102004 029 391
- GB-A- 2 233 100
- JP-A- 11 118 068

## Beschreibung

Die Erfindung betrifft eine Rohrbogenstütze nach dem Oberbegriff des Anspruchs 1.

Eine Rohrbogenstütze dieser Art ist im Stand der Technik aus der DE-A-39 23 010 bekannt geworden. Diese dient dazu, Rohrleitungen bei einem Neubau von einer horizontalen Decke aus nach oben, z.B. an eine angrenzende Wand zu verlegen. Nach dem Verlegen erfolgt das Vergiessen des Betons oder das Schäumen einer Kunststoffdecke. Die Rohrstütze besitzt Stützfüsse, an denen sie an einer Schalung abstützbar ist. Um die Rohrleitung an der Rohrbogenstütze zu befestigen, ist eine elastische Klammer vorgesehen, die in Schlitze des Gehäuses der Rohrbogenstütze einsetzbar ist. Es können mehrere solche Rohrbogenstützen zu einer Rohrbogenstützengruppe zusammengesetzt werden, sodass mehrere Rohre an diesen geführt und umgelenkt werden können.

Die EP-A-1 553 237 offenbart eine Rohrbogenstütze, die eine Oberseite mit Vertiefungen aufweist, die jeweils zur Aufnahme einer horizontal zu verlegenden Rohrleitung aufweist. Die Rohrleitungen werden jeweils horizontal um 90° umgelenkt. Die Stütze wird auf einem Gebäudeboden und nicht auf einer Schalung befestigt.

Die GB-A-2 233 100 offenbart eine Durchflussmessvorrichtung, die in einer Kammer montiert und in einem Boden versenkbar ist, so dass die Messvorrichtung von oben zugänglich ist. Die Kammer besitzt an einem unteren Ende gegenüberliegende Öffnungen, in die jeweils eine Rohrleitung für den Anschluss an die Messvorrichtung eingeführt ist. Diese Rohrleitungen sind an einem zentralen Sockel geführt. Die Messvorrichtung eignet sich nicht als Verlegehilfe.

Der Erfindung liegt die Aufgabe zugrunde, eine Rohrbogenstütze der genannten Art zu schaffen, die eine einfachere und kompaktere Leitungsführung ermöglicht.

Die Aufgabe ist gemäss Anspruch 1 gelöst. Die erfindungsgemässe Rohrbogenstütze ermöglicht ein einfacheres Verlegen von Rohrleitungen und einen modularen Aufbau einer Rohrbogenstützengruppe mit einer raumsparenden dichten Anordnung von Rohrleitungen in zwei Ebenen.

Nach einer Weiterbildung der Erfindung ist vorgesehen, dass die erste Rohrauflagefläche bereichsweise einen rohrförmigen und bereichsweise einen halbschalenförmigen Rohrführungskanal bilden. Die flexible Rohrleitung kann durch den rohrförmigen Rohrführungskanal in das Gehäuse eingeführt und entlang der bereichsweise halbschalenförmigen Rohrführung umgelenkt werden. Vorzugsweise ist der rohrförmige Bereich in einem unteren auf der Schalung befestigbaren Abschnitt des Gehäuses angeordnet. Im montierten Zustand verläuft dann dieser rohrförmige Bereich vorzugsweise im Wesentlichen parallel zur Schalung.

Nach einer Weiterbildung der Erfindung befindet sich der halbschalenförmige Bereich an einer Rückseite des Gehäuses. An dieser Rückseite kann die flexible Rohrleitung in einem herausragenden Bereich gefasst und nach oben abgebogen werden, so dass die Rohrleitung nun beispielsweise etwa 90° umgelenkt ist.

Nach einer Weiterbildung der Erfindung ist in diesem halbschalenförmigen Bereich der Rohrführung am Gehäuse ein Halter angeordnet, mit dem in diesem Bereich die flexible Rohrleitung am Gehäuse fixiert werden kann. Vorzugsweise besitzt dieser Halter Haltebacken, die an die flexible Rohrleitung anlegbar sind, um diese zu fixieren. Vorzugsweise kann der Halter mit einem Bügel geschlossen werden. Denkbar ist hier auch eine Befestigung, die als Rastverbindung ausgebildet ist. Vorzugsweise ist der Halter an einem oberen Ende des Gehäuses befestigt.

Nach einer Weiterbildung der Erfindung ist vorgesehen, dass die zweite Rohrauflagefläche zwei seitlich und vorne am Gehäuse angeordnete Führungsflächen aufweist. Diese beiden Führungsflächen bilden vorzugsweise jeweils viertelschalenförmige Rohrauflageflächen. Diese Flächen bilden vorzugsweise jeweils mit einer weiteren Fläche einer weiteren gleichen Rohrbogenstütze einen halbschalenförmigen nach vorne offenen Rohrführungskanal.

Nach einer Weiterbildung der Erfindung sind am Gehäuse im Bereich der zweiten Rohrauflagefläche Haltemittel vorgesehen, mit denen die zweite Rohrleitung am Gehäuse fixierbar ist. Diese Haltemittel sind gemäss einer Weiterbildung der Erfindung als Lappen ausgebildet, die jeweils mit einem Lappen einer weiteren Rohrbogenstütze einen Halter bilden, mit dem die zweite Rohrleitung am Gehäuse fixierbar ist. Vorzugsweise sind diese Haltemittel etwa in einem mittleren Bereich der zweiten Rohrauflagefläche angeordnet. Nach einer Weiterbildung der Erfindung besitzt die Rohrbogenstütze an Seitenflächen Mittel, mit denen sie mit einer weiteren Rohrbogenstütze verbindbar sind. Vorzugsweise sind diese Mittel so ausgebildet, dass die beiden Rohrbogenstützen zusammensteckbar sind. Dadurch ist ein modularer Aufbau von mehreren Rohrbogenstützen möglich, die jeweils gleich ausgebildet sind. Da die Rohrbogenstützen jeweils an der genannten Rückseite eine erste Rohrauflagefläche und an der Frontseite wenigstens eine zweite Rohrauflagefläche aufweist, ist eine sehr kompakte Anordnung einer Vielzahl von Rohrleitungen möglich. Vorzugsweise sind diese Rohrauflageflächen so angeordnet, dass Rohrleitungen gestaffelt in zwei parallel zueinander verlaufenden Reihen angeordnet werden können. Die Rohrleitungen der vorderen Reihe befinden sich dann jeweils zwischen zwei Rohrleitungen der hinteren Reihe. Dies gilt lediglich für die äussersten Rohrleitungen nicht. Die Anordnung ist vorzugsweise so, dass das Halbverteilermass kleiner ist als der Aussendurchmesser der Rohrleitungen. Besitzen die Rohrleitungen jeweils ein Schutzrohr, so gilt dies für den Schutzrohraussendurchmesser.

Die Rohrauflageflächen sind vorzugsweise so ausgebildet, dass die Rohrleitungen jeweils mit einem Schutzrohr an der Rohrbogenstütze montierbar sind. Diese Schutzrohre sind vorzugsweise flexible Rohre aus Kunststoff.

Die Rohrbogenstütze ist vorzugsweise so ausgebildet, dass sie sowohl auf einer Verschalung als auch auf Armierungseisen befestigt werden kann.

Weitere vorteilhafte Merkmale ergeben sich aus den abhängigen Patentansprüchen, der nachfolgenden Beschreibung sowie der Zeichnung.

Ausführungsbeilspiele der Erfindung werden nachfolgend anhand der Zeichnungen näher erläutert.
- Figur 1: schematisch eine räumliche Ansicht einer erfindungsgemässen Rohrbogenstütze,
- Figur 2: schematisch das Verbinden bzw. Zusammenstecken von zwei erfindungsgemässen Rohrbogenstützen,
- Figur: 3 schematisch eine räumliche Ansicht von zwei miteinander verbundenen Rohrbogenstützen, die auf einer Schalung abgestellt sind,
- Figur 4: schematisch das Einführen einer Rohrleitung in eine Rohrbogenstütze
- Figur 5: schematisch das Umbiegen einer Rohrleitung und
- Figur 6: schematisch räumliche Darstellungen, die das Einführen von Rohrleitungen illustrieren.

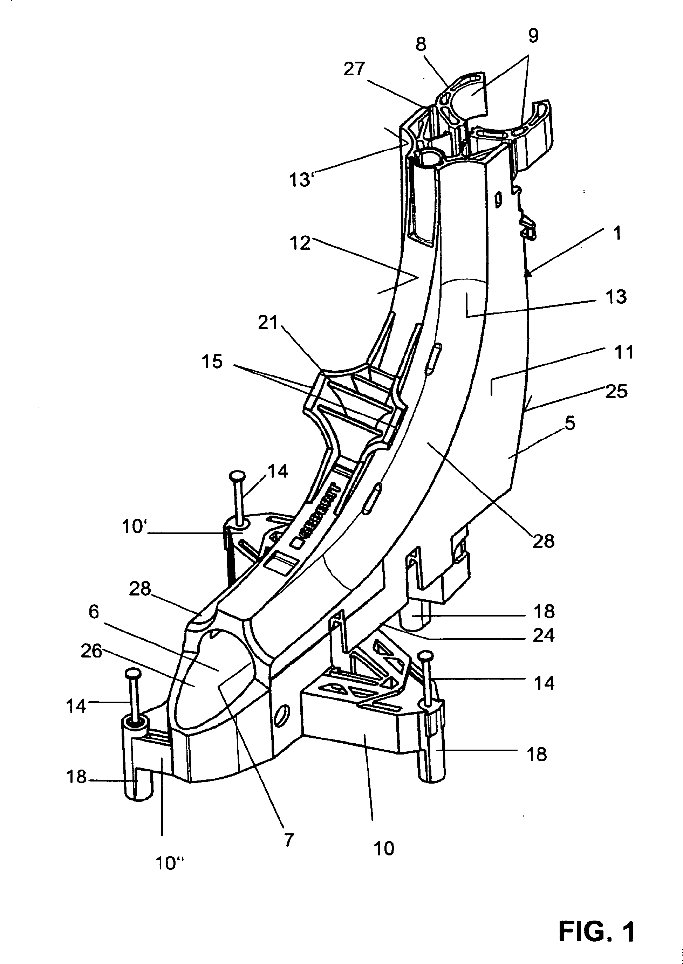

Die in Figur 1 gezeigte Rohrbogenstütze 1 dient zum Anschluss von Rohleitungen 4 und 4' an einen hier nicht gezeigten an sich bekannten Verteiler. Ein solcher Verteiler fasst die Rohrabgänge von einer Verteilungsleitung einer zentralen Stelle zusammen. Die vom Verteiler abgehenden Rohrleitungen 4 und 4' werden im Bereich der Rohrbogenstütze 1 um 90° bogenförmig umgelenkt. Die Rohrbogenstütze 1 bildet hierbei beim Montieren eine Verlegehilfe. Nach dem Verlegen wird die Bogenstütze 1 einbetoniert oder eingeschäumt. Die zu verlegenden Rohrleitungen 4 und 4' sind flexible Doppelrohrleitungen, die jeweils ein Aussenrohr 4b und ein hier nicht gezeigtes Innenrohr aufweisen. Das Aussenrohr 4b ist beispielsweise ein Wellrohr aus Kunststoff. Die Rohrleitung 4 bzw. 4' ist insbesondere eine Wasserleitung der Sanitärtechnik.

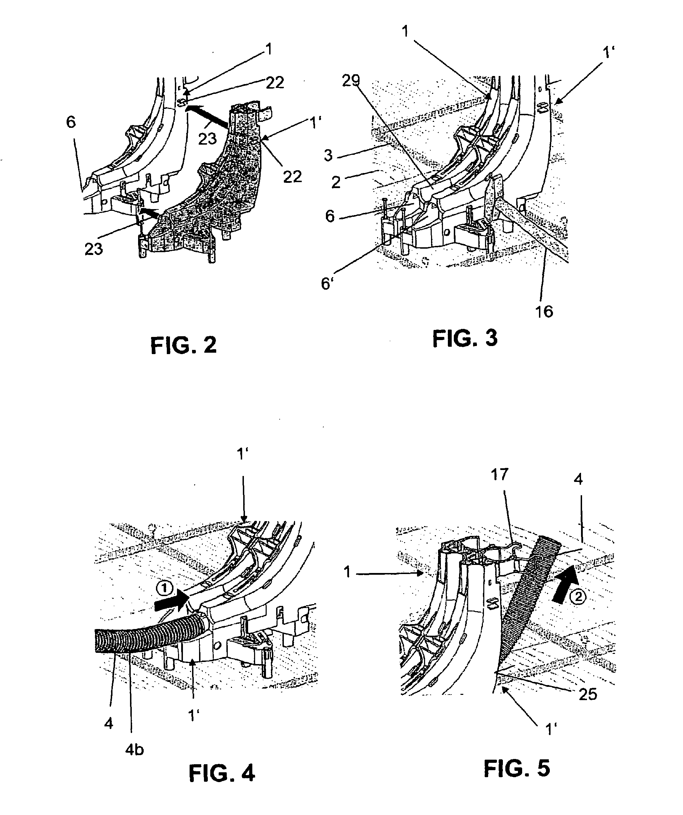

Die Rohrbogenstütze 1 besitzt eine Gehäuse 5, das wesentlichen einstückig aus einem geeignetem Kunststoff hergestellt ist. Sie besitzt mehrere nach unten ragende Füsse 18, auf denen die Rohrbogenstütze 1 gemäss Figur 3 auf eine Schalung 1 abstellbar ist. An diesen Füssen 18 sind Befestigungsmittel 14 in der Form von Stiften vormontiert, mit denen die Rohrbogenstütze 1 mittels eines Hammers 16 gemäss Figur 3 auf der Schalung 2 befestigbar ist. Denkbar ist auch eine Befestigung der Rohrbogenstütze 1 auf Armierungseisen 3. Die Füsse 18 können so ausgebildet sein, dass sie zumindest unterseitig abgebrochen oder abgebogen werden können. Die Füsse 18 sind wie ersichtlich an seitlich vorragenden Seitenstützen 10, 10' und 10" angeformt, so dass eine breite und sichere Abstützung der Rohrbogenstütze 1 auf der Schalung 2 gewährleistet ist.

An die Rohrbogenstütze 1 kann nach ihrer Befestigung auf der Schalung 2 eine weitere gleiche Rohrbogenstütze 1' angesetzt werden, wie dies in Figur 2 mit Pfeilen 23 angedeutet ist. Mit Befestigungsmittel 2, die beispielsweise als Rastmittel ausgebildet sind, können die beiden Rohrbogenstützen 1 und 1' lösbar miteinander verbunden werden. Im verbundenen Zustand liegt eine Seitenfläche 11 der Rohrbogenstütze 1 an einer hier nicht gezeigten Seitenfläche der Rohrbogenstütze 1' an. Damit ein solches Aneinanderliegen der Rohrbogenstütze 1 und 1' möglich ist, sind die Seitenstützen 10, 10' und 10" wie in Figur 1 gezeigt versetzt. Im Gehäuse 5 sind Ausnehmungen 24 vorgesehen, in die jeweils eine Stütze 10 bzw. 10' einer benachbarten Rohrstütze 1' einschiebbar ist.

Die Rohrbogenstütze 1 besitzt an einem unteren und vorderen Ende eine Öffnung 7, durch die eine Rohrleitung 4 in einen rohrförmigen Führungskanal 6 einführbar ist. Dies ist in Figur 4 gezeigt. Wie ersichtlich kann die Rohrleitung 4 mit dem Aussenrohr 4b durch die Öffnung 7 eingeführt werden. Dieser Führungskanal 6 verläuft im Gehäuse 5 im Wesentlichen parallel und im Abstand zur Schalung 2. An der Rückseite 25 des Gehäuses 5 ist dieser Führungskanal 6 offen, so dass die Rohrleitung 4 gemäss Figur 5 an dieser Rückseite 25 aus dem Gehäuse 5 herausgeführt werden kann. An der Rückseite 25 geht dieser rohrförmige Führungskanal 6 in einen hier nicht gezeigten halbschaligen Führungskanal über, der eine entsprechende halbschalenförmige Rohrauflagefläche besitzt. Im Gehäuse 5 verläuft somit eine in Figur 1 gezeigte Rohrauflagefläche 26, die bogenförmig im Gehäuse 5 verläuft und an welcher eine geführte Rohrleitung 4 entsprechend bogenförmig um 90° umlenkbar ist.

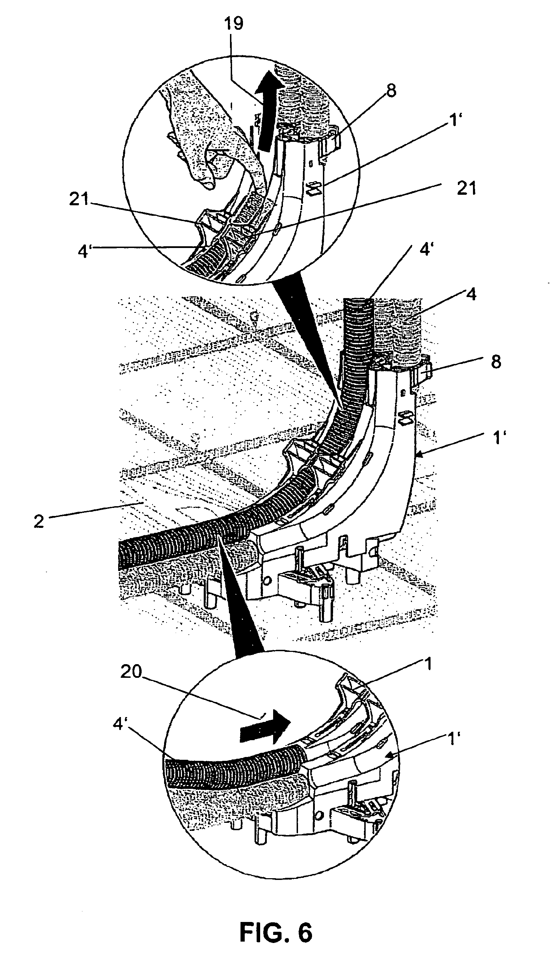

An einem oberen Ende des Gehäuses 5 ist rückseitig ein Halter 8 ausgebildet, der zwei Haltebacken 9 aufweist, die jeweils über ein Filmscharnier 27 am Gehäuse 5 angeformt sind. Mit dem Halter 8 kann eine Rohrleitung 4 gemäss Figur 6 an den nach oben ragenden Bereich am Gehäuse 5 fixiert werden. Zum Schliessen des Halters 8 sind an diesem gemäss Figur 5 Bügel 17 angeordnet, die beispielsweise aus einen geeigneten Draht geformt sind. Dies ermöglicht eine einfache und dennoch lösbare Befestigung der Rohrleitung 4 am Gehäuse 5.

Das Gehäuse 5 besitzt eine ebenfalls bogenförmig verlaufende Frontseite 12, an der zwei ebenfalls bogenförmige Führungsflächen 13 und 13' angeordnet sind. Diese bilden viertelschalenförmige Rohrführungskanäle 28 an, die gemäss Figur 6 eine Rohrleitung 4' anlegbar ist. Der Rohrführungskanal 28 der Rohrbogenstütze 1 bildet mit einem Rohrführungskanal 28 der weiteren Rohrbogenstütze 1' gemäss Figur 3 einen halbschalenförmigen Rohrführungskanal 29. Um eine in diesen Rohrführungskanal 29 eingeführte Rohrleitung 4' zu fixieren, sind an der Frontseite 12 Befestigungsmittel 4 angeordnet, die jeweils zwei seitlich vorragende Lappen 15 aufweist. Sind die Rohrbogenstützen 1 und 1' gemäss Figur 3 aneinandergelegt, so bilden die entsprechenden beiden Lappen 15 eine Brücke, welche den Rohrführungskanal 29 übergreifen und damit die eingeführte Rohrleitung 4' im Rohrführungskanal 29 fixieren.

Nachfolgend wird das Verlegen der Rohrleitung 4 und 4' näher erläutert:

In einem ersten Montageschritt wird die Rohrbogenstütze 1 auf die Schalung 2 abgestellt und durch Einschlagen der Befestigungsmittel 14 mit dem Hammer 16 auf der Schalung 2 fixiert. Nun wird die zweite Schalung 1' gemäss Figur 2 an die Rohrbogenstütze 1 angelegt und diese wird ebenfalls durch Einschlagen der Befestigungsmittel 14 auf der Schalung 2 befestigt. Gegebenenfalls würden in gleicher Weise weitere Rohrbogenstützen 1 angelegt. Die Anzahl der miteinander verbundenen Rohrbogenstützen 1 richtet sich nach der Anzahl der zu verlegenden Rohrleitungen 4.

Gemäss Figur 4 wird nun die Rohrleitung 4 in den Führungskanal 6 eingeführt bis schliesslich gemäss Figur 5 das Aussenrohr 4b an der Rückseite 5 hinausragt. Die Rohrleitung 4 wird nun entsprechend umgebogen und schliesslich mit dem Halter 8 am Gehäuse 5 fixiert. Entsprechend werden weitere Rohrleitungen 4 an den weiteren Rohrbogenstützen 1 bzw. 1' montiert.

Nun wird die weitere Rohrleitung 4' gemäss Figur 6 in den Rohrführungskanal 29 eingeführt und gemäss Figur 6 oben soweit eingeschoben, bis auch das Aussenrohr dieser weiteren Rohrleitung 4' schliesslich das Gehäuse 5 nach oben überragt. Entsprechend werden auch die weiteren Rohrleitungen 4' in die weiteren Rohrfiihrungskanäle 29 eingeführt. Die eingeführten Rohrleitungen 4 und 4' sind schliesslich sehr kompakt in den Rohrbogenstützen 1 und 1' verlegt. Es können somit auf vergleichsweise kleinem Raum auch eine grössere Zahl von Rohrleitungen 4 und 4' verlegt werden. Nach dem Verlegen wird die Rohrbogenstütze 1 bzw. die Rohrbogenstützen 1 und 1' einbetoniert oder eingeschäumt. Schliesslich werden die Innenrohre an den hier nicht gezeigten Verteiler angeschlossen.

### BEZUGSZEICHENLISTE

- 1.: Stütze
- 2.: Schalung
- 3.: Armierungseisen
- 4.: Rohr
- 5.: Gehäuse
- 6.: Führungskanal
- 7.: Öffnung
- 8.: Halter
- 9.: Halterbacke
- 10.: Seitenstütze
- 11.: Seitenfläche
- 12.: Frontseite
- 13.: Kanalfläche
- 14.: Befestigungsmittel
- 15.: Lappen
- 16.: Hammer
- 17.: Bügel
- 18.: Zapfen
- 19.: Pfeil
- 20.: Pfeil
- 21.: Befestigungsmittel
- 22.: Befestigungsmittel
- 23.: Pfeil
- 24.: Ausnehmungen
- 25.: Rückseite
- 26.: Rohrauflagefläche
- 27.: Filmscharnier
- 28.: Rohrführungskanal
- 29.: Rohrführungskanal

## Patentansprüche

1. Rohrbogenstütze als Verlegehilfe zum Führen flexibler Rohrleitungen (4, 4') der Sanitär- oder Heizungstechnik, mit einem an einer Schalung (2) befestigbaren Gehäuse (5), das eine auf die Schalung (2) abstellbare Unterseite, eine von dieser nach oben ragende Rückseite (25) und eine der Rückseite (25) abgewendete Frontseite (12) und wenigstens abschnittweise Rohrauflageflächen (26, 28) aufweist, an denen ein Abschnitt der Rohrleitung (4, 4') um etwa 90° umlenkbar ist, **dadurch gekennzeichnet, dass** das Gehäuse (5) an der Rückseite (25) eine erste Rohrauflagefläche (26) für eine erste Rohrleitung (4) und an einer von dieser Rückseite (25) abgewendeten Frontseite (12) wenigstens eine zweite Rohrauflagefläche (28) für eine zweite Rohrleitung (4') bildet, wobei diese beiden Rohrauflageflächen (26, 28) parallel zueinander verlaufen.

2. Rohrbogenstütze nach Anspruch 1, **dadurch gekennzeichnet, dass** die erste Rohrauflagefläche (26) bereichsweise einen rohrförmigen und bereichsweise einen halbschalenförmigen Rohrführungskanal (6) aufweist.

3. Rohrbogenstütze nach Anspruch 2, **dadurch gekennzeichnet, dass** der rohrförmige Rohrführung (6) in einem unteren, auf der Schalung (2) befestigbaren Abschnitt des Gehäuses (5) angeordnet ist und dass dieser Kanal (6) im Wesentlichen parallel zur Schalung (2) verläuft.

4. Rohrbogenstütze nach Anspruch 2 oder 3, **dadurch gekennzeichnet, dass** der halbschalenförmige Rohrführungskanal an der genannten Rückseite (25) nach hinten offen ist und die erste Rohrleitung (4) im Wesentlichen rechtwinklig von der Schalung (2) an dieser Rückseite (25) rechtwinklig wegführt.

5. Rohrbogenstützen nach einem der Ansprüche 1-4, **dadurch gekennzeichnet, dass** die zweite Rohrauflagefläche zweiseitig und parallel zueinander verlaufende Führungsflächen (13) aufweist.

6. Rohrbogenstütze nach Anspruch 5, **dadurch gekennzeichnet, dass** die beiden Führungsflächen (13) jeweils viertelschalenförmige Rohrauflageflächen bilden.

7. Rohrbogenstütze nach Anspruch 6 **dadurch gekennzeichnet, dass** die beiden Führungsflächen (13) jeweils mit einer weiteren Fläche einer weiteren gleichen Rohrbogenstütze (1') einer halbschalenförmigen nach vorne wenigstens bereichsweise offenen Rohrführungskanal (29) bildet.

8. Rohrbogenstützen nach Anspruch 6 oder 7, **dadurch gekennzeichnet, dass** das Gehäuse (5) frontseitig weitere Haltemittel (21) zum Fixieren der zweiten Rohrleitung (4') aufweist.

9. Rohrbogenstütze nach Anspruch 8 **dadurch gekennzeichnet, dass** die Haltemittel (21) zweiseitig vorragende Lappen (15) aufweisen, die jeweils mit einem Lappen einer weiteren Rohrbogenstütze (1') ein brückenförmiges Halteelement bilden.

10. Rohrbogenstützen nach einem der Ansprüche 1-9, **dadurch gekennzeichnet, dass** sie Mittel (22) aufweist, mit denen sie mit einer weiteren Rohrbogenstütze (1') verbindbar ist.

11. Rohrbogenstütze nach einem der Ansprüche 1-10 **dadurch gekennzeichnet, dass** das Gehäuse (5) an einer Rückseite (25) Befestigungsmittel (8) aufweist, mit denen die erste Rohrleitung (4) am Gehäuse (5) fixierbar ist.

12. Rohrbogenstützen nach Anspruch 11 **dadurch gekennzeichnet, dass** die Befestigungsmittel (8) als Halter ausgebildet sind.

13. Rohrbogenstütze nach einem der Ansprüche 1-12, **dadurch gekennzeichnet, dass** sie zum Verlegen von Rohrleitungen (4, 4') vorgesehen ist, die jeweils ein Aussenrohr (4b) aufweisen.

## Claims

1. Pipe bend support as a laying aid for guiding flexible pipelines (4, 4') in sanitary and heating engineering, having a housing (5) which can be fastened to a formwork (2) and has an underside that can be set down on the formwork (2), a rear side (25) that projects upwardly from said underside, a front side (12) facing away from the rear side (25), and, at least in portions, pipe bearing surfaces (26, 28) on which a portion of the pipeline (4, 4') can be deflected through approximately 90°, **characterized in that** the housing (5) forms on the rear side (25) a first pipe bearing surface (26) for a first pipeline (4) and forms on a front side (12) facing away from this rear side (25) at least a second pipe bearing surface (28) for a second pipeline (4'), wherein these two pipe bearing surfaces (26, 28) run parallel to one another.

2. Pipe bend support according to Claim 1, **characterized in that** the first pipe bearing surface (26) has a tubular pipe guide channel (6) in some regions and a pipe guide channel (6) in the form of a half shell in some regions.

3. Pipe bend support according to Claim 2, **characterized in that** the tubular pipe guide channel (6) is arranged in a lower portion of the housing (5) that can be fastened to the formwork (2), and **in that** this channel (6) runs substantially parallel to the formwork (2).

4. Pipe bend support according to Claim 2 or 3, **characterized in that** the pipe guide channel in the form of a half shell is open towards the rear on said rear side (25) and the first pipeline (4) leads away from the formwork (2) substantially at right angles on this rear side (25).

5. Pipe bend support according to one of Claims 1-4, **characterized in that** the second pipe bearing surface has guide surfaces (13) that run parallel to one another on two sides.

6. Pipe bend support according to Claim 5, **characterized in that** the two guide surfaces (13) form pipe bearing surfaces in each case in the form of quarter shells.

7. Pipe bend support according to Claim 6, **characterized in that** the two guide surfaces (13) form, in each case with a further surface of a further identical pipe bend support (1'), a pipe guide channel (29) which is in the form of a half shell towards the front and is open at least in some regions.

8. Pipe bend support according to Claim 6 or 7, **characterized in that** the front of the housing (5) has further retaining means (21) for fixing the second pipeline (4').

9. Pipe bend support according to Claim 8, **characterized in that** the retaining means (21) have lugs (15) that protrude on two sides and form a bridge-like retaining element in each case with a lug of a further pipe bend support (1').

10. Pipe bend support according to one of Claims 1-9, **characterized in that** it has means (22) by way of which it can be connected to a further pipe bend support (1').

11. Pipe bend support according to one of Claims 1-10, **characterized in that** the housing (5) has fastening means (8) on a rear side (25), by way of which fastening means (8) the first pipeline (4) can be fixed to the housing (5).

12. Pipe bend support according to Claim 11, **characterized in that** the fastening means (8) are formed as a holder.

13. Pipe bend support according to one of Claims 1-12, **characterized in that** it is provided for laying pipelines (4, 4') which have in each case an outer pipe (4b).

## Revendications

1. Support tubulaire coudé servant d'aide à la pose pour guider des conduites tubulaires flexibles (4, 4') dans la technologie sanitaire ou de chauffage, avec un boîtier (5) pouvant être fixé sur une coque (2), qui présente un côté inférieur pouvant être posé sur la coque (2), un côté arrière (25) saillant vers le haut depuis celui-ci, et un côté avant (12) opposé au côté arrière (25), et au moins en partie des surfaces d'appui tubulaires (26, 28), contre lesquelles une portion de la conduite tubulaire (4, 4') peut être déviée d'environ 90°, **caractérisé en ce que** le boîtier (5) forme sur le côté arrière (25) une première surface d'appui tubulaire (26) pour une première conduite tubulaire (4) et sur un côté avant (12) opposé à ce côté arrière (25) au moins une deuxième surface d'appui tubulaire (28) pour une deuxième conduite tubulaire (4'), ces deux surfaces d'appui tubulaires (26, 28) s'étendant parallèlement l'une à l'autre.

2. Support tubulaire coudé selon la revendication 1, **caractérisé en ce que** la première surface d'appui tubulaire (26) présente un canal de guidage tubulaire (6) en partie de forme tubulaire et en partie en forme de demi-coque.

3. Support tubulaire coudé selon la revendication 2, **caractérisé en ce que** le canal de guidage tubulaire (6) de forme tubulaire est disposé dans une portion inférieure du boîtier (5) pouvant être fixée sur la coque (2) et **en ce que** ce canal (6) s'étend essentiellement parallèlement à la coque (2).

4. Support tubulaire coudé selon la revendication 2 ou 3, **caractérisé en ce que** le canal de guidage tubulaire en forme de demi-coque est ouvert vers l'arrière au niveau dudit côté arrière (25) et la première conduite tubulaire (4) est guidée essentiellement à angle droit depuis la coque (2) contre ce côté arrière (25).

5. Support tubulaire coudé selon l'une quelconque des revendications 1 à 4, **caractérisé en ce que** la deuxième surface d'appui tubulaire présente des faces de guidage (13) s'étendant des deux côtés et parallèlement l'une à l'autre.

6. Support tubulaire coudé selon la revendication 5, **caractérisé en ce que** les deux faces de guidage (13) forment à chaque fois des faces d'appui tubulaires en forme de quart de coque.

7. Support tubulaire coudé selon la revendication 6, **caractérisé en ce que** les deux faces de guidage (13) forment à chaque fois avec une autre face d'un autre support tubulaire coudé identique (1') un canal de guidage tubulaire (29) en forme de demi-coque ouvert au moins en partie vers l'avant.

8. Support tubulaire coudé selon la revendication 6 ou 7, **caractérisé en ce que** le boîtier (5) présente du côté avant d'autres moyens de retenue (21) pour la fixation de la deuxième conduite tubulaire (4').

9. Support tubulaire coudé selon la revendication 8, **caractérisé en ce que** les moyens de retenue (21) présentent des volets (15) saillant des deux côtés, qui forment à chaque fois avec un volet d'un autre support tubulaire coudé (1') un élément de retenue en forme de pont.

10. Support tubulaire coudé selon l'une quelconque des revendications 1 à 9, **caractérisé en ce qu'**il présente des moyens (22) avec lesquels il peut être connecté à un autre support tubulaire coudé (1').

11. Support tubulaire coudé selon l'une quelconque des revendications 1 à 10, **caractérisé en ce que** le boîtier (5) présente sur un côté arrière (25) des moyens de fixation (8) avec lesquels la première conduite tubulaire (4) peut être fixée sur le boîtier (5).

12. Support tubulaire coudé selon la revendication 11, **caractérisé en ce que** les moyens de fixation (8) sont réalisés sous forme d'organe support.

13. Support tubulaire coudé selon l'une quelconque des revendications 1 à 12, **caractérisé en ce qu'**il est prévu pour poser des conduites tubulaires (4, 4') qui présentent à chaque fois un tube extérieur (4b).
